# EUROPÄISCHE PATENTSCHRIFT

(11) **EP 1 423 544 B1**
(45) Veröffentlichungstag und Bekanntmachung des Hinweises auf die Patenterteilung: **25.10.2006**
(21) Anmeldenummer: 02764807.0
(22) Anmeldetag: 30.07.2002
(51) Int. Cl.: C14C 11/00, B05D 7/12, B32B 27/40, B32B 9/02, B32B 5/18, B29C 45/14

(54) **VERBUNDBAUTEILE MIT EINER DEKOROBERFLÄCHE UND THERMOPLASTISCH HINTERSPRITZTEM, MIKROZELLULÄREN POLYURETHAN MIT KLEINEM DRUCKVERFORMUNGSREST, SOWIE VERFAHREN ZU DEREN HERSTELLUNG**
COMPOSITE COMPONENTS WITH A DECORATIVE SURFACE AND THERMOPLASTIC REAR-INJECTED, MICROCELLULAR POLYURETHANE WITH A SMALL PERMANENT SET, AND METHOD FOR THE PRODUCTION THEREOF
PIECE COMPOSITE COMPRENANT UNE SURFACE DECORATIVE ET UN POLYURETHANNE MICROCELLULAIRE, A FAIBLE ECART PERMANENT, SURMOULE PAR INJECTION DE THERMOPLASTIQUE, ET PROCEDE DE PRODUCTION DE LADITE PIECE

(30) Priorität: 09.08.2001 DE 10138130
(43) Veröffentlichungstag der Anmeldung: 02.06.2004
(73) Patentinhaber: BASF Aktiengesellschaft, 67056 Ludwigshafen (DE)
(72) Erfinder: BARTL, Jürgen, 67069 Ludwigshafen (DE); GRITTMANN, Ernst-Jürgen, 67069 Ludwigshafen (DE); GUENTHER, Erhard, 67454 Hassloch (DE); GERKE, Heinz-Udo, 49448 Lemförde (DE); KLENZ, Rainer, 67454 Hassloch (DE)
(86) Internationale Anmeldenummer: PCT/EP2002/008449
(87) Internationale Veröffentlichungsnummer: WO 2003/014403

(56) Entgegenhaltungen:
- EP-A- 0 337 183
- EP-A- 0 900 600
- EP-A- 1 028 133
- EP-A- 1 106 638
- DE-A- 10 019 605
- DE-A- 19 548 770
- DE-A- 19 951 776
- US-A- 3 708 333
- US-A- 5 456 976
- ANDERS S ET AL: "HINTERSPRITZEN VON DEKORMATERIALIEN DURCH NIEDERDRUCK-SPRITZGIESSEN" KUNSTSTOFFE, CARL HANSER VERLAG. MUNCHEN, DE, Bd. 80, Nr. 9, 1. September 1990 (1990-09-01), Seiten 997-1002, XP000226449 München ISSN: 0023-5563 in der Anmeldung erwähnt
- BUERKLE E ET AL: "HINTERPSRITZEN UND HINTERPRESSEN IN-MOULD LAMINATION BY INJECTION AND COMPRESSION MOULDING PROCESSES" KUNSTSTOFFE, CARL HANSER VERLAG. MUNCHEN, DE, Bd. 86, Nr. 3, 1. März 1996 (1996-03-01), Seiten 298-300,303-304, XP000587702 ISSN: 0023-5563 in der Anmeldung erwähnt

## Beschreibung

Die vorliegende Erfindung betrifft ein Verbundbauteile umfassend in dieser Reihenfolge eine Schicht aus einem Dekormaterial, gegebenenfalls eine Kleberschicht, eine Schicht aus einem bestimmten zelligen Polyisocyanat-Polyadditions-Elastomer und eine Schicht aus einem hinterspritzten, hintergossenen oder hinterpressten thermoplastischen Kunststoff. Die Erfindung betrifft des weiteren Verfahren zur Herstellung der genannten Verbundbauteile sowie deren Verwendung im Fahrzeug-, Flugzeug-, Schiff- und Möbelbau.

Dekorbeschichtete Kunststoffverbundbauteile und Verfahren zu deren Herstellung sind dem Fachmann im allgemeinen bekannt. In der Regel wird ein Verbund aus einer Textil- oder Ledermaterialschicht und einem Kunststoffbauteil mittels Verklebens oder Kaschierens hergestellt (s.a. DE-A 296 22 843). Insbesondere im Automobilbau ist dieses die bevorzugte Variante, wenn großflächige Innenausstattungsbauteile oder solche mit komplexer Geometrie zu fertigen sind. Dieses Verfahren erfordert allerdings eine Vielzahl separater Arbeitsschritte, die zum größten Teil manuell ausgeführt werden müssen und sich nicht automatisieren lassen. Die kosten- und zeitintensive Fertigung von hochwertigen dekorbeschichteten Verbundbauteilen ist daher im allgemeinen auf Modelle der Luxusklasse beschränkt (s.a. G. Franke, "Leder - ein klassischer Interieurwerkstoff" in "Kunststoffe im Automobilbau: Zukunft durch neue Anwendungen", VDI-Verlag, Düsseldorf, 1998, Seiten 337 bis 350; Bangert et al., "Kreative Materialkombinätionen - Beispiele innovativer Anwendungen" in "Kunststoffe im Automobilbau: Kostenreduktion durch innovatives Spritzgießen", VDI-Verlag, Düsseldorf, 1997).

Um zu einem effizienteren serientauglichen Verfahren zu gelangen, hat man versucht, Dekormaterialien mit einem Kunststoffmaterial direkt in einem Arbeitsgang zu hinterspritzen oder hinterpressen (s.a. Kunststoffe, 1990, 80, Seiten 997 bis 1002). Hierbei wird jedoch regelmäßig die Dekormaterialoberfläche aufgrund der auftretenden hohen Arbeitstemperaturen in Mitleidenschaft gezogen. Beispielsweise werden bei Verwendung von Leder als Dekormaterial punktuelle oder flächige Verbrennungen oder aber Glanzstellen beobachtet. Um die zumeist empfindlichen Dekormaterialien beim Hinterspritzen nicht zu beschädigen, werden unterschiedliche Lösungen vorgeschlagen.

In der DE-A 199 03 338 wird eine Spritzgussvorrichtung zum Hinterspritzen von Dekormaterialien beschrieben, bei der das Werkzeug zur Vermeidung hoher Drücke beim Einführen des schmelzeförmigen Kunststoffes nicht vollständig geschlossen wird. Damit dennoch kein Kunststoffmaterial aus dem Werkzeug austreten kann, ist eine spezielle Tauchkante vorzusehen, die, um einem schnellen Verschleiß vorzubeugen, in besonderer Weise ausgestaltet sein muss. Dieses Verfahren erfordert für jedes neue Bauteil ein besonders konzipiertes, aufwendiges neues Werkzeug und ist daher mit erheblichen Zusatzkosten verbunden.

In der EP-A 0 506 218 wird ein verbessertes Verfahren zur Herstellung von textil-, leder- und folienbeschichteten Kunststoffformteiien beschrieben, mit dem sich ein gleichmäßiger Druckaufbau beim Hinterspritzen und Hinterpressen erzielen lässt. Allerdings wird auch bei diesem Verfahren, insbesondere bei Folien mit ausgeprägter Oberflächenstruktur, häufig ein so genannter Bügeleffekt beobachtet. Bei einfarbiger Textiloberware tritt dieses Phänomen in Form matter oder glänzender Oberflächen in Erscheinung. Bei velourartiger Oberware ist häufig die Fließrichtung der Schmelze erkennbar und bei genarbten Folien, z.B. Leder, ist eine Verflachung der Narbung feststellbar (s.a. Bürkle et al., Kunststoffe, 1996, 86, Seiten 298 bis 307).

Gemäß DE-A 199 51 776 wird zur Schonung des Lederdekormaterials beim Hinterspritzen die das Leder aufnehmende Werkzeugform gekühlt. Dieses macht allerdings zwangsläufig den Einsatz von Spezialwerkzeugen erforderlich.

Neben der Erzielung eines angemessenen optischen Eindrucks wird von dekorbeschichteten Verbundbauteilen vermehrt auch eine gute Haptik gewünscht, die Oberfläche soll sich gut anfühlen, d.h. einen so genannten Soft-Touch aufweisen. Bisher wird insbesondere Leder zu diesem Zweck in einem getrennten Arbeitsschritt zunächst rückseitig mit einer Schaumschicht beklebt und anschließend, ebenfalls mittels Klebens, mit einem Formstück aus Hartplastik verbunden. So beschreibt die DE-A 198 15 115 ein lederkaschiertes Fahrzeuginnenausstattungsteil umfassend ein starres Trägerteil, ein Abstandspolsterteil und eine Echtlederschicht. Die einzelnen Schichten werden mittels eines Schmelzklebers unter Druck und Erwärmung miteinander verbunden. In der EP-A 0 337 183 wird an die Unterseite eines Leders eine Polyurethansperrschicht gepresst, die durch Erwärmen reaktiviert wird. Viskosität und Menge der vor dem Pressvorgang auf der Lederunterseite aufgebrachten Polyurethanschicht sind dabei so aufeinander abzustimmen, dass die Dicke der Sperrschicht 35 bis 65 % der Dicke der Lederschicht beträgt. Anschließend wird das erhaltene Formteil hinterschäumt.

Um die Narbung von Leder oder Lederfaserstoffen beim Hinterpressen oder Hinterspritzen zu erhalten sowie um Faltenbildung zu vermeiden, schlagen Michaeli, Helpenstein und Brast in den Mitteilungen des Instituts für Kunststoffverarbeitung an der RWTH Aachen, Nr 4/2000, 35. Jahrg., in dem Artikel "LEFA - Lederfaserstoffe für das Dekor von PKW-Innenraumverkleidungen" vor, auf die Lederschicht eine Schaumschicht sowie auf letztere eine Vliesschicht aufzukaschieren. Die Schaumschicht soll die Struktur und den natürlichen Eindruck des Leders erhalten helfen, das Vlies wird benötigt, um ein Kollabieren des Schaums beim Hinterpressen oder Hinterspritzten mit heißer Schmelze zu verhindern. Die einzelnen Schichten werden mittels Klebekaschierung, bevorzugt mittels Flammkaschierung miteinander verbunden.

Die Verfahren nach dem Stand der Technik zur Herstellung von dekorbeschichteten Verbundbauteilen, insbesondere solchen mit einem Soft-Touch, sind sehr materialaufwendig, erfordern häufig viele zusätzliche Arbeitsschritte und lassen sich daher nicht automatisieren. Sie führen zu Produkten, die nur bedingt recycelbar sind. Zudem lässt sich in der Regel kein hochwertiger Soft-Touch-Effckt erzielen, so dass serienfähige Bauteile bislang noch nicht zur Verfügung stehen.

Es war daher eine Aufgabe der vorliegenden Erfindung, die vorgehend geschilderten Nachteile abzustellen. Insbesondere lag der Erfindung die Aufgabe zugrunde, mit Dekormaterialien versehene Verbundbauteile zur Verfügung zu stellen, deren Dekoroberfläche durch den Herstellprozess nicht in Mitleidenschaft gezogen wird. Des weiteren war es eine Aufgabe der Erfindung, dekorbeschichtete Verbundbauteile mit einem hochwertigen Soft-Touch verfügbar zu machen. Es galt somit auch, ein Verfahren zur Verfügung zu stellen, mit dem sich dekorbeschichtete Verbundbauteile einfach, zuverlässig und reproduzierbar, gegebenenfalls auch mit hochwertiger Soft-Touch-Oberfläche, herstellen lassen, ohne dabei die vorgenannten Nachteile in Kauf nehmen zu müssen.

Demgemäß wurden Verbundbauteile gefunden, die in dieser Reihenfolge eine Schicht aus einem Dekormaterial (A), eine Schicht aus einem zelligen, insbesondere mikrozelligen Polyisocyanat-Polyadditions-Elastomer (B) mit einem Druckverformungsrest kleiner 25 % nach DIN 53572 (als Prüfkörper wird ein Würfel der Abmessung 40 mm x 400 mm x 30 mm ohne Silikonanstrich verwendet, die Prüfung erfolgt bei konstanter Verformung, wobei der Prüfkörper um 40 % zusammengedrückt und 22 Stunden bei 80°C im Umluftschrank gehalten, die Prüfeinrichtung nach der Entnahme aus dem Wärmeschrank 2 Stunden im zusammengedrückten Zustand auf Raumtemperatur abgekühlt, anschließend der Prüfkörper aus der Prüfeinrichtung entnommen und 10 min ± 30 s nach der Entnahme der Prüfkörper aus der Prüfeinrichtung die Höhe der Prüfkörper auf 0,1 mm genau gemessen wird) und eine Schicht aus einem hinterspritzten, hintergossenen oder hinterpressten thermoplastischen Kunststoff (C) umfassen. Des weiteren wurden Verfahren zur Herstellung der erfindungsgemäßen Verbundbauteile gefunden sowie deren Verwendung im Fahrzeug-, Flugzeug-, Schiff- und Möbelbau.

Ein Verfahren zur Herstellung von erfindungsgemäßen Verbundbauteilen (Verfahren I) zeichnet sich dadurch aus, dass man ein Dekormaterial (A) in eine Werkzeugform einlegt, wobei man die Dekormaterialoberseite an der Werkzeugwandung anlegt, auf dieses Dekormaterial rückseitig die das zellige Polyisocyanat-Polyadditions-Elastomer (B) bildenden Komponenten im Gemisch aufträgt oder diese während des oder nach dem Auftragen vermengt und ausreagieren lässt und bei dem man die gebildete Elastomerschicht anschließend rückseitig mit einem thermoplastischen Polymer hinterspritzt, hintergießt oder hinterpresst.

Das vorgenannte Verfahren kann in mehreren separaten Schritten oder in einem-einheitlichen Prozess durchgeführt werden. Im all gemeinen wird das Dekormaterial zunächst in eine Werkzeugform eingelegt, z.B. mit Hilfe eines Nadelgreifers, und anschließend fixiert. Die Fixierung erfolgt üblicherweise durch Nadeln, Spannhaken, Spannrahmen, punktuelles Verkleben oder mittels Ansaugens, d.h. durch Anlegen von Vakuum. Einlegen und Fixieren können Prozessschritte eines teil- oder vollautomatisierten Verfahrens sein. Bei der Werkzeugform für den Hinterschäumschritt kann es sich um ein separates Werkzeugbauteil handeln. Ebenso ist es möglich, bereits die Werkzeugform eines Hinterspritz-, Hintergieß- oder Hinterpresswerkzeuges für diesen Zweck zu verwenden. Auf diese Weise spart man einen Werkzeugwechsel ein.

Auf der ersten Verfahrensstufe wird das Dekormaterial direkt mit dem zelligen Elastomer auf der Basis von Polyisocyanat-Polyadditionsprodukten hinterschäumt.

Diese zelligen Polyisocyanat-Polyadditions-Elastomere (B) zeichnen sich dadurch aus, dass sie einen Druckverformungsrest kleiner 25 % bei der Prüfung nach DIN 53572 aufweisen. Als Prüfkörper beim Test nach DIN 53572 wird ein Würfel der Abmessung 40 mm x 400 mm x 30 mm ohne Silikonanstrich verwendet. Die Prüfung erfolgt bei konstanter Verformung, wobei der Prüfkörper um 40 % zusammengedrückt und 22 Stunden bei 80°C im Umluftschrank gehalten, die Prüfeinrichtung nach der Entnahme aus dem Wärmeschrank 2 Stunden im zusammengedrückten Zustand auf Raumtemperatur abgekühlt, anschließend der Prüfkörper aus der Prüfeinrichtung entnommen und 10 min ± 30 s nach der Entnahme der Prüfkörper aus der Prüfeinrichtung die Höhe der Prüfkörper auf 0,1 mm genau gemessen wird.

Die Berechnung des Druckverformungsrestes (DVR) erfolgt nach der Gleichung DVR = [(H₀ - H₂)/(H₀ - H₁)] x 100 [%], wobei
- H₀:: die ursprüngliche Höhe des Prüfkörpers in mm,
- H₁:: die Höhe des Prüfkörpers im verformten Zustand in mm und
- H₂:: die Höhe des Prüfkörpers nach der Entspannung in mm
bedeutet.

Die Zellen der zelligen Polyisocyanat-Polyadditions-Elastomere (B) weisen bevorzugt Durchmesser von 0,01 bis 1,5 mm, besonders bevorzugt von 0,01 bis 0,5 mm und insbesondere von 0,01 bis 0,15 mm auf. In einer besonders bevorzugten Ausführungsform verfügen mindestens 90, vorzugsweise mindestens 99 und insbesondere mindestens 99,9 % der Zellen des zelligen Elastomers über einen Durchmesser von 0,01 bis 0,5 mm. Besonders geeignet sind Polyisocyanat Polyadditions -Elastomere mit einer Dichte nach DIN 53420 von 200 bis 1100, bevorzugt 200 bis 800 kg/m³, einer Zugfestigkeit nach DIN 53571 von ≥ 2, bevorzugt von 2 bis 8 N/mm², einer Dehnung nach DIN 53571 von ≥ 300, bevorzugt 300 bis 700 % und einer Weiterreißfestigkeit nach DIN 53515 von ≥ 8, bevorzugt 8 bis 25 N/mm. Ein sehr guter Soft-Touch-Effekt lässt sich insbesondere bei Verwendung von Polyisocyanat-Polyadditions-Elastomer (B) mit Dichten kleiner 400, bevorzugt kleiner 360 und insbesondere kleiner 300 kg/m³ erzielen.

In den zelligen Polyisocyanat-Polyadditions-Elastomeren (B) liegt bevorzugt mindestens ein Teil der Zellen in Form geschlossener Zellen vor. Das zellige Polyisocyanat-Polyadditions-Elastomer (B) verfügt üblicherweise über eine gute Wärmeformbeständigkeit.

Geeignete Elastomere auf der Basis von Polyisocyanat-Polyadditionsprodukten und ihre Herstellung sind allgemein bekannt und vielfältig beschrieben, beispielsweise in der EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen.

Die Herstellung der Polyisocyanat-Polyadditions-Elastomere kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40 bis 95°C, bevorzugt 50 bis 90°C.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden. Die Formteile sind nach 5 bis 60 Minuten ausgehärtet und damit entformbar.

Die Menge des in das Formwerkzeug eingebrachten Reaktionsgemisches wird üblicherweise so bemessen, dass die erhaltenen Formkörper die bereits dargestellte Dichte aufweisen.

Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die zelligen Polyisocyanat-Polyadditions-Elastomere werden zweckmäßigerweise nach dem one shot-Verfahren mit Hilfe der Niederdruck-Technik oder insbesondere der Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird in einem zweistufigen Prozess zunächst ein NCO-gruppenhaltiges Prepolymeres hergestellt. Dazu wird die Komponente (b) mit (a) im Überschuss üblicherweise bei Temperaturen von 80°C bis 160°C, vorzugsweise von 110°C bis 150°C, zur Reaktion gebracht. Die Reaktionszeit ist auf das Erreichen des theoretischen NCO-Gehaltes bemessen.

Bevorzugt erfolgt demnach die Herstellung der Formkörper in einem zweistufigen Verfahren, indem man in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend gegebenenfalls die weiteren eingangs dargestellten Komponenten umsetzt.

Zur Verbesserung der Entformung der hinterschäumten Dekore hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wässrigen Seifenlösungen, zu beschichten.

Die Formstandzeiten betragen in Abhängigkeit von der Größe und Geometrie des Formteils durchschnittlich 5 bis 60 Minuten.

Nach der Herstellung der Formteile in der Form können die Formteile bevorzugt für eine Dauer von 1 bis 48 Stunden bei Temperaturen von üblicherweise von 70 bis 120°C getempert werden.

Zu den dem Fachmann allgemein bekannten Ausgangskomponenten zur Herstellung der Polyisocyanat-Polyadditionsprodukte kann folgendes ausgeführt werden:

Als Isocyanate (a) können allgemein bekannte (cyclo)aliphatische und/oder aromatische Polyisocyanate eingesetzt werden. Zur Herstellung der Elastomerprodukte eignen sich besonders aromatische Diisocyanate, vorzugsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyl-diisocyanat, 1,2-Diphenylethandiisocyanat, Phenylendiisocyanat und/oder aliphatische Isocyanate wie z.B. 1,12-Dodecan-, 2-Ethyl-1,4-butan-, 2-Methyl-1,5-pentan- 1,4-Butan-diisocyanat und vorzugsweise 1,6-Hexamethylendiisocyanat und/oder cycloaliphatische Diisocyanate z.B. Cyclohexan-1,3- und 1,4-diisocyanat, 2,4- und 2,6-Hexahydrotoluyllen-diisocyanat, 4,4'-, 2,4'- und 2,2'-Dicyclohexylmethan-diisocyanat, vorzugsweise 1-Isocyanato-3,3,5-trimethyl-5-isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Bevorzugt werden gegebenenfalls modifiziertes 2,2'-, 2,4'-und/oder 4,4'-Diphenylmethandiisocyanat (MDI), 1,5-Naphthylendiisocyanat (NDI), 3,3'-Dimethyl-diphenyl-diisocyanat, 2,4- und/oder 2,6-Toluylendiisocyanat (TDI) und/oder Mischungen dieser Isocyanate eingesetzt.

Als gegenüber Isocyanaten reaktive Verbindungen (b) können allgemein bekannte Polyhydroxylverbindungen eingesetzt werden, bevorzugt solche mit einer Funktionalität von 2 bis 3 und bevorzugt einem Molekulargewicht von 60 bis 6000, besonders bevorzugt 500 bis 6000, insbesondere 800 bis 5000. Bevorzugt werden als (b) Polyetherpolyole, Polyesterpolyalkohole und/oder hydroxylgruppenhaltige Polycarbonate eingesetzt.

Bevorzugt werden als (b) Polyesterpolyalkohole, im Folgenden auch als Polyesterpolyole bezeichnet, eingesetzt. Geeignete Polyesterpolyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für zweiwertige Alkohole sind Glykole mit 2 bis 16 Kohlenstoffatomen, vorzugsweise 2 bis 6 Kohlenstoffatome, wie z.B. Ethylenglykol, Diethylenglykol, Butandiol-1,4, Pentandiol-1,5, Hexandiol-1,6, Decandiol-1,10, 2-Methylpropan-1,3-diol, 2,2-Dimethylpropandiol-1,3, Propandiol-1,3 und Dipropylenglykol. Je nach den gewünschten Eigenschaften können die zweiwertigen Alkohole allein oder gegebenenfalls in Mischungen untereinander verwendet werden.

Als Polyesterpolyole vorzugsweise verwendet werden Ethandiol-polyadipate, 1,4-Butandiol-polyadipate, Ethandiol-butandiol-polyadipate, 1,6-Hexandiol-neopentylglykol-polyadipate, 1,6-Hexandiol-1,4-Butandiol-polyadipate, 2-Methyl-1,3-propandiol-1,4-butandiol-polyadipate und/oder Polycaprolactone.

Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit ε-Caprolacton gebildete Polykondensate.

Geeignete carbonatgruppenhaltige Polyoxyalkylenglykole, im wesentlichen Polyoxytetramethylenglykole, sind Polykondensate aus diesen mit Alkyl- bzw. Arylcarbonaten oder Phosgen.

Beispielhafte Ausführungen zu der Komponente (b) sind in DE-A 195 48 771, Seite 6, Zeilen 26 bis 59 gegeben.

Zusätzlich zu den bereits beschriebenen gegenüber Isocyanaten reaktiven Komponenten können des weiteren niedermolekulare Kettenverlängerungs- und/oder Vernetzungsmitteln (b1) mit einem Molekulargewicht Mₙ von kleiner 500, bevorzugt 60 bis 499 g/mol eingesetzt werden, beispielsweise ausgewählt aus der Gruppe der di- und/oder trifunktionellen Alkohole, di- bis tetrafunktionellen Polyoxyalkylen-polyole und der alkylsubstituierten aromatischen Diamine oder von Mischungen aus mindestens zwei der genannten Kettenverlängerungs- und/oder Vernetzungsmittel.

Als (b1) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylenglykol und/oder di- bis tetrafunktionelle Polyoxyalkylen-polyole.

Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bis-ethylenglykol- oder -butandiol-1,4, Hydroxyalkylenether des Hydrochinons oder Resorcins, wie z.B. 1,4-Di-(β-hydroxyethyl)-hydrochinon oder 1,3-Di (β-hydroxyethyl)-resorcin, Alkanolamine mit 2 bis 12 Kohlenstoffatomen, wie z.B. Ethanolamin, 2-Aminopropanol und 3-Amino-2,2-dimethylpropanol, N-Alkyldialkanolamine, wie z.B. N-Methyl- und N-Ethyl-diethanolamin.

Als höherfunktionelle Vernetzungsmittel (b1) seien beispielsweise tri- und höherfunktionelle Alkohole, wie z.B. Glycerin, Trimethylolpropan, Pentaerythrit und Trihydroxycyclohexane sowie Trialkanolamine, wie z.B. Triethanolamin genannt.

Als Kettenverlängerungsmittel können verwendet werden: alkylsubstituierte aromatische Polyamine mit Molekulargewichten Mₙ vorzugsweise von 122 bis 400 g/mol, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind.

Zur Herstellung der zelligen, insbesondere mikrozelligen Polyisocyanat-Polyadditionsprodukte können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet werden.

Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Bevorzugt werden jedoch keine aromatischen Diamine eingesetzt. Bevorzugt erfolgt die Herstellung der Elastomerprodukte somit in Abwesenheit von aromatischen Diaminen.

Die Herstellung der zelligen Polyisocyanat-Polyadditionsprodukte kann bevorzugt in Gegenwart von Wasser (c) durchgeführt werden. Das Wasser wirkt sowohl als Vernetzer unter Bildung von Harnstoffgruppen als auch aufgrund der Reaktion mit Isocyanatgruppen unter Bildung von Kohlendioxid als Treibmittel. Aufgrund dieser doppelten Funktion wird es in dieser Schrift getrennt von (e) und (b) aufgeführt. Per Definition enthalten die Komponenten (b) und (e) somit kein Wasser, das per Definition ausschließlich als (c) aufgeführt wird.

Die Wassermengen, die zweckmäßigerweise verwendet werden können, betragen 0,01 bis 5 Gew.-%, vorzugsweise 0,3 bis 3,0 Gew.-%, bezogen auf das Gewicht der Komponente (b). Das Wasser kann vollständig oder teilweise in Form der wässrigen Lösungen der sulfonierten Fettsäuren eingesetzt werden.

Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (d) zugefügt werden. Die Katalysatoren (d) können einzeln wie auch in Abmischung miteinander zugegeben werden. Vorzugsweise sind dies metallorganische Verbindungen, wie Zinn-(II)-Salze von organischen Carbonsäuren, z.B. Zinn-(II)-dioctoat, Zinn-(II)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclchexylamin, Diazabicyclcoctan, N,N'-Dimethylpiperazin, N-Methyl,N'-(4-N-Dimethylamino-)Butylpiperazin, N,N,N',N",N"-Pentamethyldiethylendiamin oder ähnliche.

Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-Gruppen.

Je nach einzustellender Reaktivität gelangen die Katalysatoren (d) in Mengen von 0,001 bis 0,5 Gew.-%, bezogen auf das Prepolymere, zur Anwendung.

Gegebenenfalls können in der Polyurethanherstellung übliche Treibmittel (e) verwendet werden. Geeignet sind beispielsweise niedrig siedende Flüssigkeiten, die unter dem Einfluss der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung derartiger zellhaltiger elastischer Formkörper aus Harnstoffgruppen gebunden enthaltenden Elastomeren hängt ab von der Dichte, die man erreichen will, sowie von der Menge des bevorzugt mit verwendeten Wassers. Im allgemeinen liefern Mengen von 1 bis 15 Gew.-%, vorzugsweise 2 bis 11 Gew.-%, bezogen auf das Gewicht der Komponente (b), zufriedenstellende Ergebnisse. Besonders bevorzugt wird ausschließlich Wasser (c) als Treibmittel eingesetzt.

Bei der Herstellung des Elastomerprodukts können Hilfs- und Zusatzstoffe (f) eingesetzt werden. Dazu zählen beispielsweise allgemein bekannte oberflächenaktive Substanzen, Hydrolyseschutzmittel, Füllstoffe, Antioxidantien, Zellregler, Flammschutzmittel sowie Farbstoffe. Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise zusätzlich zu den Emulgatoren Verbindungen mit emulgierender Wirkung, wie die Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure. Des weiteren kommen Schaumstabilisatoren in Frage, wie z.B. oxethylierte Alkylphenole, oxethylierte Fettalkohole, Paraffinöle, Ricinusöl- bzw. Ricinolsäureester, Türkischrotöl und Erdnussöl und Zellregler, wie Paraffine und Fettalkohole. Außerdem können als (f) Polysiloxane und/oder Fettsäuresulfonate eingesetzt werden. Als Polysiloxane können allgemein bekannte Verbindungen verwendet werden, beispielsweise Polymethylsiloxane, Polydimethylsiloxane und/oder Polyoxyalkylen-Silikon-Copolymere. Bevorzugt weisen die Polysiloxane eine Viskosität bei 25°C von 20 bis 2000 mPas auf.

Als Fettsäuresulfonate können allgemein bekannte sulfonierte Fettsäuren, die auch kommerziell erhältlich sind, eingesetzt werden. Bevorzugt wird als Fettsäuresulfonat sulfoniertes Rizinusöl eingesetzt.

Die oberflächenaktiven Substanzen werden üblicherweise in Mengen von 0,01 bis 5 Gew.-Teilen, bezogen auf 100 Gew.-Teile der Komponente (b) angewandt.

Die zelligen Polyisocyanat-Polyadditions-Elastomere (B) können in offenen und geschlossenen Werkzeugen hergestellt werden. Als Werkzeugformen kommen hierbei allgemein übliche Formen, z.B. Metallformen in Frage. Die nicht mit dem Dekormaterial ausgelegte Formhälfte kann gegebenenfalls beschichtet oder mit üblichen Formtrennmitteln versehen sein.

In einer bevorzugten Ausführungsform wird die obere Schicht des gebildeten zelligen Polyisocyanat-Polyadditions-Elastomers vor dem Hinterspritz-, Hintergieß- oder Hinterpressvorgang über die gesamte Fläche oder nur in Teilbereichen abgetrennt. Diese Oberflächenschicht kann beispielsweise nach bekannten Verfahren abgespalten, abgeschnitten, abgeschält, abgefräst oder abgeschliffen werden, wobei die Dicke der zu entfernenden Schicht in weiten Bereichen frei gewählt werden kann.

Die Dicke der im Verbundbauteil auf der Dekormaterialschicht (A) vorliegenden Polyisocyanat-Polyadditions-Elastomerschicht (B) liegt im allgemeinen im Bereich von 0,5 mm bis 10 cm und nimmt bevorzugt Werte von 1,5 mm bis 3 cm an. Sofern die Elastomerschicht (B) nicht nur dem Verbundbauteil zu einer einwandfreien Dekormaterialoberfläche im Originalzustand verhelfen, sondern auch einen nachhaltigen Soft-Touch-Effekt, insbesondere bei Lederoberflächen, erzeugen soll, liegt deren Dicke im Verbundbauteil vorteilhafterweise im Bereich von 2,0 mm, bevorzugt 2,5 mm oder darüber. Überlicherweise wird für die Herbeiführung eines Soft-Touch-Effektes auf Elastomere (B) mit Schichtdicken im Bereich von 2,5 bis 10 mm, bevorzugt von 3 bis 6 mm zurückgegriffen. Ein verlässlicher Schutz der Dekoroberfläche gelingt dagegen bereits bei Schichtdicken im Bereich von 0,5 bis 2,0 mm.

Für das erfindungsgemäße Verfahren zur Herstellung von dekorbeschichteten Formteilen kann auf alle bekannten Ausführungsformen des Hinterspritzens, Hintergießens oder Hinterpressens von Dekormaterialien mit Kunststoffen zurückgegriffen werden (s.a. Jaeger und Fischbach, Kunststoffe 1991, 81, Seiten 869. bis 875; Anders et al., ibid.). Geeignet sind folglich nicht nur das Niederdruckspritzgießen oder das Gasinnendruck-Verfahren (GID-Verfahren), sondern auch herkömmliche Standardspritzgießverfahren, d.h. es kann ohne weiteres auch mit sehr hohen Spritzdrücken im Bereich von 100 bis 3500 bar, vorzugsweise von 200 bis 3000 bar gearbeitet werden. Standardspritzgießverfahren sowie die dafür erforderlichen Werkzeuge und Gerätschaften sind dem Fachmann hinlänglich bekannt. Das Spritzgießverfahren der Niederdrucktechnik findet sich z.B. bei Bürkle et al., ibid., oder bei Woite und Straßer in "Kunststoffe im Automobilbau", VDI-Verlag, Düsseldorf, 1994, auf den Seiten 280 bis 312 beschrieben.

In der Regel wird bei der Niederdrucktechnik der Schmelzdruck beim Einlassen in das Werkzeug bevorzugt so eingestellt, dass er 100 bar sowie insbesondere 80 bar nicht überschreitet. Zwar kann nach erfolgter Fülldruckoptimierung auf Kompression und Nachdruck, d.h. auf Prozessschritte, die üblicherweise beim Spritzgießen zur Anwendung kommen, verzichtet werden, dieses ist jedoch beim erfindungsgemäßen Verfahren zur Verhinderung von Beschädigungen am Dekormaterial nicht unbedingt erforderlich.

Bei der Gasinnendruck-Technologie wird in der Regel gegen Ende des Einspritzvorgangs die plastische Seele durch ein inertes Gas, zumeist Stickstoff, verdrängt. Details zum GID-Verfahren sind dem Fachmann bekannt und z.B. in Eyerer et al., Kunststoffe, 1991, 81, Seiten 851 bis 862, festgehalten.

Für das Hinterpressen, worunter im Sinne der Erfindung auch alle gängigen Hinterprägeverfahren verstanden werden sollen, von beschichteten Dekormaterialien mit Kunststoffen wird bevorzugt auf das Spritzprägeverfahren zurückgegriffen. Beim Spritzprägeverfahren wird die Kavität des Werkzeugs zunächst teilgefüllt, d.h. die Kunststoffschmelze wird in das geöffnete Werkzeug eingespritzt. Die Ausformung des Formteils erfolgt über eine Schließbewegung des Werkzeugs. Der Masseeintrag in das Werkzeug kann als Strang oder als Breitband über eine Breitschlitzdüse oder einen Heißkanal in das Werkzeug eingeführt werden.

Dem Fachmann bekannt ist z.B. die Ausführungsform des Hinterprägens nach dem Quellflussverfahren, auch SP-MOLD- oder Sumitomo-Verfahren genannt. Bei diesem Verfahren wird die Schmelze bei geöffnetem Werkzeug durch ein Heißkanalsystem in die horizontale Trennebene der unteren festen Werkzeughälfte eingebracht. Dabei berührt die eingebrachte Formmasse die mit dem zelligen Polyisocyanat-Polyadditions-Elastomer beschichtete Dekormaterialschicht vor dem Prägen in der Regel nicht. Beim eigentlichen Prägevorgang übt dann die fließende Schmelze eine Scherwirkung auf die beschichtete Dekorschicht aus. Eine weitere bekannte Ausführungsform des Hinterprägens stellt das Strangablageverfahren dar. Die Plastifizierung erfolgt bei diesem Verfahren in einem Extruder oder einem Spritzaggregat, was die Heißkanaltechnik nach dem Quellflussverfahren überflüssig macht. Der Schmelzeauftrag auf das Unterwerkzeug geschieht durch die Rückzugbewegung der Plastifiziereinheit in der Schneckenachse. Nach dem Ablegen der Schmelze in Form eines Strangs oder als Breitband, wird das Werkzeug geschlossen und die Prägekraft aufgebracht. Geeignete Hinterprägeverfahren finden sich u.a. auch bei Woite und Straßer, ibid., Seiten 291 bis 297, beschrieben.

Als Dekormaterialen (A) kommen ein- oder mehrschichtige Strukturen in Frage. Geeignet sind z.B. Polyester-, Polyamid-, Polypropylen- oder Baumwolltextilien als Gewebe, des weiteren Gewirke, Gestricke und Nadel- oder Polfliese (s.a. Woite und Straßer, ibid., Seiten 301 und 302, sowie G. Jägerhuber, "VLIESE - verschiedene Technologien im Vergleich" in "Kunststoffe im Automobilbau: Zukunft durch neue Anwendungen", VDI-Verlag, Düsseldorf, 1998, Seiten 351 bis 354).

Bevorzugt wird auf Leder als Dekormaterial (A) zurückgegriffen, wobei alle gebräuchlichen Ledersorten wie Nappa, Anilin-, Nubuk-, Chevron-, Velour- oder Boxleder sowie auch Lederfasermaterialien in Frage kommen. Hierbei kann es sich z.B. um allgemein bekannte Rinder-, Schaf-, Ziegen-, Schweine-, Straußen- oder Krokodilleder handeln, wie es beispielsweise für Sitzpolster, Rükkenlehnen, Armlehnen, Türseitenverkleidungen, Armaturenbretter oder Dachverkleidungen verwendet wird. Es können metallsalzgegerbte (z.B. Chrom, Aluminium) wie auch metallsalzfreie Leder eingesetzt werden. Die Leder können des weiteren gefärbt, beschichtet, imprägniert oder anderweitig nach üblichen Verfahren behandelt sein. Die Herstellung solcher Leder wird z.B. in "Das Leder", 1992 (43), Seiten 283 ff. ausführlich beschrieben. Bevorzugt sind Ledersorten, die man mittels metallsalzfreier Gerbung erhält. Sie verfügen regelmäßig über einen geringeren Hitzeschrumpf, insbesondere bei trocken-heißem Klima. Derartige Leder sind auch unter der Bezeichnung FOC-Leder (free of chrome) bekannt.

Selbstverständlich können auch Chromleder verarbeitet werden. Diese weisen im allgemeinen eine hydrothermale Stabilität von etwa 100°C auf. Verwendet man Chromleder, bietet sich es sich an, auf das Niederdruckspritzgießen beim Hinterspritzprozess zurückzugreifen.

Bei der Lederherstellung nach dem Wet-end- wie auch nach dem Finish-Prozess sind die Prozesschemikalien und Farbstoffe bevorzugt derart auszuwählen, dass sie sowohl dem Druck als auch den thermischen Bedingungen des Hinterspritz- bzw. Hinterpressvorgangs standhalten. Vor allem die im Wet-end-Prozess zum Einsatz kommenden Fettungsmittel sind vorzugsweise im Kollagengeflecht gut fixiert, so dass beim Hinterspritz-/Hinterpressvorgang keine Fettmigration an die Oberfläche oder in den Kunststoff eintritt, wodurch gegebenenfalls Glanzstellen oder Fettverunreinigungen an der Oberfläche oder eine Beeinträchtigung der Haftung zwischen Leder und Kunststoff auftreten könnten. Des weiteren sind die in der Vor- und Nachgerbung zum Einsatz kommenden Gerbstoffe bevorzugt derart zu wählen, dass eine gute Faserseparierung erfolgt und die Leder eine gute Licht-, Wärme- und Hitzebeständigkeit aufweisen. Dies ist vor allem mit Glutardialdehyd in Kombination mit synthetischen Gerbstoffen auf Basis Dihydroxidiphenylsulfon zu erreichen. Unabhängig vom gewählten Gerbstoff ist beim Wetend-Prozess eine Schrumpfungstemperatur von mindestens 70°C im nassen Zustand vorteilhaft.

Die bevorzugte Dicke des verwendeten Leders ist im allgemeinen abhängig von der Form und Anwendung des Lederbauteils und kann zwischen 0,4 und 3,0 mm variieren, wobei in der Regel eine Dicke von 0,8 bis 3,0, vorzugsweise 1,0 bis 2,0 und insbesondere von 1,2 bis 1,8 mm bevorzugt ist.

Vorteilhafterweise hinterspritzt, hintergießt oder hinterpresst man Leder in einem möglichst trockenen Zustand. Als günstig haben sich Feuchtigkeitsgehalte kleiner 20 Gew.-% erwiesen.

Die Sichtseite des Leders, die an der Formfläche des Formwerkzeugs zur Anlage gelangt, kann bereits gebrauchsfertig mit einer handelsüblichen Lackierung, in Fachkreisen auch Zurichtung genannt, versehen sein. Bevorzugt wird auf nicht vorbehandeltes, d.h. nicht lackiertes bzw. nicht zugerichtetes Leder, so genanntes Crust- oder Halbfertigleder, zurückgegriffen. Im letzteren Fall kann die Lackierung am fertigen, mit Kunststoff hinterspritzten/hintergossenen/hinterpressten Lederteil aufgebracht werden. Zwecks Lackierung können alle in der Lederherstellung bekannten Lackierprodukte und -verfahren eingesetzt werden.

An die Qualität des Leders werden in der Regel geringere Anforderungen gestellt als bei den Verfahren, in denen kein Polyisocyanat-Polyadditions-Elastomer mit einem Druckverformungsrest kleiner 25 % nach DIN 53572 verwendet wird, ohne jedoch Einbußen hinsichtlich Optik oder Haptik in Kauf nehmen zu müssen.

Wenngleich nach dem erfindungsgemäßen Verfahren nicht unbedingt erforderlich, kann die am Leder anliegende Formfläche des Werkzeugs beim Hinterschäum- und/oder Hinterspritzvorgang selbstverständliche auch gekühlt werden, beispielsweise auf Temperaturen im Bereich von 10 bis 80°C, bevorzugt 20 bis 75°C und insbesondere von 40 bis 65 °C.

Als Hinterspritz-, Hintergieß- oder Hinterpresskunststoffe (C) kommen alle bekannten polymeren Trägermaterialien in Frage. Geeignet sind z.B. thermoplastische Polymere wie Polyolefine, z.B. Polyethylen oder Polypropylen, Polyester, z.B. Polybutylenterephthalat (PBT) und Polyethylenterephthalat (PET), Polycycloolefine, Poly(meth)acrylate, z.B. Polymethylmethacrylat, Polyamide, Polycarbonate, Polyurethane, Polyacetale, z.B. Polyoxymethylen (POM), Polystyrole, Polyphenylenether, Polysulfone, Polyethersulfone, Polyetherketone, Styrol (co) polymere oder Mischungen der vorgenannten Polymere.

Geeignete Styrol(co)polymere stellen ABS-, ASA- und AES-Polymerisate dar. Bei ABS-Polymerisaten handelt es sich u.a. um schlagzähmodifizierte Styrol/Acrylnitril-Polymerisate, bei denen Pfropfcopolymerisate von Styrol und Acrylnitril auf Polybutadienkautschuken in einer Copolymermatrix aus Styrol und Acrylnitril vorliegen. Unter ASA-Polymerisate werden im allgemeinen schlagzähmodifizierte Styrol/Acrylnitril-Polymerisate verstanden, bei denen Pfropfcopolymerisate von vinylaromatischen Verbindungen, insbesondere Styrol, und Vinylcyaniden, insbesondere Acrylnitril, auf Polyalkylacrylatkautschuken in einer Copolymermatrix aus insbesondere Styrol und Acrylnitril vorliegen. In Frage kommt hier beispielsweise das Handelsprodukt Luran^{®} S (BASF AG).

Weiterhin geeignet als Styrol(co)polymere sind Styrol/Acrylnitril-Copolymerisate (SAN), Methylmethacrylat/Acrylnitril/Butadien/Styrol-Polymerisate, z.B. das Handelsprodukt Terlux^{®} (BASF AG), Mischungen unterschiedlicher Styrol/Butadien-Polymerisate, Styrol/Butadien-Blockcopolymerisate und vinylchlorid/Acrylat-Pfropfcopolymerisate. Bevorzugt setzt sich das Hinterspritz-, Hintergieß- oder Hinterpressmaterial aus Polyethylen, Polypropylen, Polyamiden, Polybutylenterephthalat, thermoplastischen Polyurethanen, Polycarbonaten oder Styrol(co)polymeren, insbesondere ABS-Polymerisaten, sowie deren Mischungen zusammen.

Bevorzugte Polymermischungen enthalten Polycarbonat und Polybutylentherephthalat, Polybutylentherephthalat und ASA-Polymerisat, Polyamid und Polyphenylenether, Polyphenylenether und schlagzähmodifiziertes Polystyrol, Polyamid und ABS-Polymerisat oder Polycarbonat und ABS-Polymerisat.

Für die Herstellung der verwendeten Polymerschmelzen können selbstverständlich auch Recyclate aus den genannten thermoplastischen Polymeren eingesetzt werden.

Bevorzugtes Polybutylenterephthalat verfügt über eine Schmelzflussrate (MFR) nach ISO 1133 von 5 bis 50, insbesondere von 5 bis 30 g/10 min (bestimmt bei 230°C unter einer Last von 2,16 kg). Solche Produkte sind zum Beispiel unter der Bezeichnung Ultradur^{®} (BASF AG) im Handel erhältlich.

In bevorzugte SAN-Polymerisate ist bis zu 45 Gew.-%, vorzugsweise bis zu 20 Gew.-% Acrylnitril einpolymerisiert. Derartige SAN-Polymerisate weisen eine Schmelzflussrate von 1 bis 25, insbesondere von 4 bis 20 g/10 min auf. Solche Produkte sind z.B. unter der Bezeichnung Luran^{®} (BASF AG) im Handel erhältlich.

Bevorzugte ABS-Polymerisate setzen sich zu max. 35 Gew.-%, insbesondere zu max. 20 Gew.-% aus Acrylnitril und zu max. 35 Gew.-%, insbesondere zu max. 30 Gew.-% aus Butadien zusammen. Deren Schmelzflussrate liegt im Bereich von 1 bis 40, insbesondere im Bereich von 2 bis 30 g/10 min. Solche Produkte sind z. B. unter der Bezeichnung Terluran^{®} (BASF AG) im Handel erhältlich.

Unter der verwendeten Bezeichnung Polypropylen sollen sowohl Homo- als auch Copolymere des Propylens verstanden werden, Copolymere des Propylens enthalten in untergeordneten Mengen mit Propylen copolymerisierbare Monomere, beispielsweise C₂- bis C₈-Alk-1-ene wie Ethen, 1-Buten, 1-Penten oder 1-Hexen. Selbstverständlich können auch zwei oder mehrere verschiedene Comonomere verwendet werden.

Die vorgenannten Polymerwerkstoffe sind im allgemeinen bekannt, beispielsweise aus H. Domininghaus, Die Kunststoffe und ihre Eigenschaften, VDI-Verlag, Düsseldorf (1992).

Das polymere Trägermaterial kann 1 bis 60, vorzugsweise 5 bis 50, besonders bevorzugt 10 bis 40 Gew.-%, bezogen auf das Gesamtgewicht des Trägermaterials, an üblichen Hilfs-/Füll- und/oder Faserstoffen enthalten.

Derartige Hilfsstoffe sind beispielsweise Gleit- oder Entformungsmittel, Wachse, Effektfarbmittel, z.B. Pigmente wie Titandioxid oder Farbstoffe, Flammschutzmittel, Antioxidantien, Stabilisatoren, z.B. gegen Lichteinwirkung, oder Antistatika.

Als teilchenförmige Füllstoffe können zudem Ruß, Holzmehl, amorphe Kieselsäure, Magnesiumcarbonat, Magnesiumhydroxid, Bariumsulfat, gepulvertes Quarz, Glimmer, Mica, Bentonite, Talkum, insbesondere mit einer mittleren Korngröße im Bereich von 0,1 bis 10 µm (gemessen nach DIN 6615), Calciumcarbonat, Kreide, Glaskugeln, Feldspat oder insbesondere Calciumsilikate wie Wollastonit und Kaolin verwendet werden.

Des weiteren können zur Verstärkung der vorgenannten thermoplastischen Polymere und deren Mischungen auch Fasermaterialien, worunter vorliegend auch plättchenförmige Produkte zu verstehen sind, wie Flachs, Hanf, Jute, Sisal, Ramie oder Carnaf, Aluminium-Flakes oder Aramid-, Stahl-, Kohle- oder Glasfasern, letztere auch mit geeigneten Schlichten beschichtet, verwendet werden. Die Fasern liegen in dem Kunststoffmaterial im allgemeinen in einer Menge von 3 bis 40, bevorzugt von 5 bis 40 und besonders bevorzugt von 10 bis 35 Gew.-%, bezogen auf das Gesamtgewicht des Trägermaterials , vor. Als Glasfasern kommen Lang- und Kurzglasfasern sowie Mischungen dieser Fasertypen in Betracht.

Exemplarisch seien als zum Hinterspritzen, Hintergießen oder Hinterpressen besonders geeignete faserverstärkte Kunststoffmaterialien faserverstärktes ABS-Polymerisat, insbesondere langfaserverstärktes ABS-Polymerisat, faserverstärkte PBT/ASA- und PA/ABS-Mischungen sowie füllstoffhaltiges Polypropylen, z.B. mit teilchenförmigen Füllstoffen wie Talkum oder mit Glasfasern versetztes Polypropylen genannt. Füllstoff- oder faserhaltige thermoplastische Polymere werden insbesondere dann eingesetzt, wenn Verbundbauteile mit hoher Steifigkeit und hoher Festigkeit erhalten werden sollen. Der Füllstoff- oder Faseranteil im thermoplastischen Polymer hat dabei keinen nachteiligen Einfluss auf die mit den erfindungsgemäßen Verbundbauteilen einhergehenden positiven Oberflächeneigenschaften wie Soft-Touch oder das Nichtauftreten von Glanzstellen oder Wülsten.

Selbstverständlich kann man zu dem polymeren Trägermaterial auch übliche Zusatzstoffe wie Licht-, UV- und Wärmestabilisatoren, Ruße, Verarbeitungshilfsmittel sowie Flammschutzmittel in den üblichen Mengen hinzufügen.

Das hinterspritzte, hintergossene oder hinterpresste Formteil kann manuell oder automatisch aus dem Werkzeug genommen werden.

In einem weiteren Verfahren werden die erfindungsgemäßen Verbundbauteile erhalten, indem man ein Dekormaterial (A) mit dem zelligen Polyisocyanat-Polyadditions-Elastomer (B) verklebt und die erhaltene Verbundstruktur von der Seite des Elastomerprodukts mit einem thermoplastischen Polymer (C) hinterspritzt, hintergießt oder hinterpresst (Verfahren II).

Für diese Ausführungsform gelten hinsichtlich Dekormaterial (A), Polyisocyanat-Polyadditions-Elastomer (B) und thermoplastischer Polymere (C) sowie hinsichtlich der Aufbringung letzterer auf die Verbundstruktur aus Dekormaterial (A) und der Schicht aus Polyisocyanat-Polyadditions-Elastomer (B) die für das vorgehende Verfahren (Verfahren I) gemachten allgemeinen und bevorzugten Angaben entsprechend.

Das Polyisocyanat-Polyadditions-Elastomer (A) wird bei dieser Ausführungsform nicht auf das Dekormaterial aufgeschäumt, sondern zunächst separat hergestellt und anschließend auf das Dekormaterial aufgeklebt. Das Verkleben des Dekormaterials, insbesondere Leders mit dem zelligen Polyisocyanat-Polyadditions-Elastomerprodukt kann nach bekannten kontinuierlichen oder diskontinuierlichen Verfahren mit für den Fachmann bekannten Klebern erfolgen. Beispielsweise kann der Kleber auf beide zu verklebenden Oberflächen, d.h. auf Dekormaterialrückseite sowie auf die Schicht aus Polyisocyanat-Polyadditions-Elastomer oder nur auf eine dieser zu verbindenden Oberflächen aufgetragen werden, wobei beim Verkleben gegebenenfalls auch Druck, falls erforderlich auch über einen längeren Zeitraum, ausgeübt werden kann. Der Kleberauftrag kann mittels Sprühens oder Streichens, manuell oder maschinell erfolgen. Als Klebstoffe können grundsätzlich alle bekannten Klebstoffe verwendet werden, die zu einer Haftung zwischen Dekormaterial und dem Polyisocyanat-Polyadditions-Elastomer führen. Solche Kleber sind regelmäßig im Handel erhältlich. Die Elastomerschicht kann vor oder nach dem Verkleben auf die gewünschte Dicke, Länge oder Breite zugeschnitten werden. Gleichermaßen kann die Verbundstruktur aus Dekormaterial und aufgeklebter Elastomerschicht auf gewünschte Größen zugeschnitten werden. Bevorzugt wird die gewünschte Schichtdicke des Polyisocyanat-Polyadditions-Elastomerprodukts vor dem Verkleben eingestellt. Hierfür können beispielsweise aus den in Form von Blöcken oder Zylindern vorliegenden Polyisocyanat-Polyadditions-Elastomerprodukten entsprechende Platten gefräst, geschnitten oder geschält werden. Geeignete Werkzeuge sind dem Fachmann bekannt und kommerziell erhältlich. Besonders geeignete Schichtdicken des Polyisocyanat-Polyadditions-Elastomers (B) liegen im allgemeinen im Bereich von 0,5 mm bis 10 cm und nehmen bevorzugt Werte von 1,5 mm bis 3 cm an. Sofern die Elastomerschicht (B) nicht nur dem Verbundbauteil zu einer einwandfreien Dekormaterialoberfläche im Originalzustand verhelfen, sondern auch einen nachhaltigen Soft-Touch-Effekt, insbesondere bei Lederoberflächen, erzeugen soll, liegt deren Dicke vorteilhafterweise im Bereich von 2,0 mm, bevorzugt 2,5 mm oder darüber. Überlicherweise wird für die Herbeiführung eines Soft-Touch-Effektes auf Elastomere (B) mit Schichtdicken im Bereich von 2,5 bis 10 mm, bevorzugt von 3 bis 6 mm zurückgegriffen.

Die Verbundstruktur aus Dekormaterial (A) und aufgeklebter Schicht aus dem Polyisocyanat-Polyadditions-Elastomer (B) wird in der Regel in einem separatem Arbeitsgang hergestellt und anschließend in die entsprechende Werkzeugform für das Hinterspritzen, -gießen oder -pressen mit der Dekormaterialschicht zur Seite der Werkzeugwandung eingelegt. Selbstverständlich ist es auch möglich, die Verbundstruktur unmittelbar in dem genannten Werkzeug, z.B. einem Hinterspritzwerkzeug zu erzeugen.

In einer Ausführungsform des Verfahrens (Verfahren IIa) wird das Aushärten des Klebers nicht abgewartet, d.h. die frisch verklebte Verbundstruktur aus Dekormaterial und Elastomerschicht wird unmittelbar hinterspritzt, hintergossen oder hinterpresst. Auf diese Weise werden beim Aufbringen des Thermoplasten Dekor- und Elastomerschicht aufeinander gedrückt. Ein zusätzliches Aneinanderpressen von Dekor- und Elastomerschicht nach dem Verkleben erübrigt sich auf diese weise.

In einer weiteren Ausführungsform zur Herstellung der erfindungsgemäßen Verbundbauteile (Verfahren III) wird eine Schicht aus dem zelligen Polyisocyanat-Polyadditions-Elastomer (B), bevor sie mit dem Dekormaterial (A) in Kontakt gebracht wird, vorzugsweise mit einer Vielzahl im wesentlichen gleichmäßig verteilter kleiner Löcher perforiert. Diese Perforationslöcher verfügen bevorzugt über Durchmesser kleiner 1 mm, insbesondere kleiner 0,5 mm. Die Perforation kann auf bekannte Weise mittels geeigneter Stanzwerkzeuge oder -nadeln, z.B. mit Hilfe von Nadelkissen erzeugt werden. Die Schicht aus perforiertem zelligen Polyisocyanat-Polyadditions-Elastomer (B) kann auf gängige Art und Weise vor dem Hinterspritzen, -gießen oder -pressen an der Dekormaterialschicht befestigt werden, z.B. wie für Verfahren I beschrieben. Beim Hinerspritzen, -gießen oder -pressen der Rückseite der an der Dekormaterialschicht anliegenden zelligen Elastomerschicht (B) findet über die in die Perforationslöcher eindringende Polymerschmelze eine unmittelbare Anbindung zwischen dem thermoplastischen Kunststoff (C) und dem Dekormaterial (A) statt. Auf diese Weise gelingt eine Fixierung der Schicht aus zelligem Polyisocyanat-Polyadditions-Elastomer (B) auf dem Dekormaterial (A), ohne dass zusätzlich ein Kleber verwendet werden müsste. Aufgrund der kleinen Durchmesser der Perforationslöcher sind die Anbindungspunkte zwischen thermoplastischem Kunststoff und Dekormaterial auf der Oberseite des Dekormaterials im allgemeinen nicht zu erkennen. Regelmäßig dringt nur eine geringe Menge an Schmelze bis zum Dekormaterial durch und führt dort zu einer eher punktuellen Anbindung.

Mit den erfindungsgemäßen Verbundbauteilen lässt sich ein hervorragender Soft-Touch-Effekt erreichen, d.h. die Dekoroberflächen, insbesondere die Lederoberflächen zeigen eine besonders angenehme Haptik und verfügen über eine exzellente Rückstellelastizität und ein optimal weiches Druckgefühl. Des weiteren werden auch in der Serienfertigung keine Glanzstellen oder Thermoplastwülste auf der Dekoroberfläche beobachtet. Zudem geht auch bei empfindlichen Lederoberflächen die natürliche Narbung nicht verloren, so dass besonders edel anmutende Bauteile zum ersten Mal auf einfache und reproduzierbare Weise wirtschaftlich zugänglich werden. Von Vorteil ist ebenfalls, dass die vorgenannten Verbundbauteile auch unter Anwendung herkömmlicher Spritzgieß- und Pressverfahren, d.h. unter Anwendung hoher Arbeitsdrücke erhalten werden, ohne dass die Dekoroberfläche in Mitleidenschaft gezogen wird und ohne dass es-für diese Fälle einer zusätzlichen Schutzzwischenschicht, z.B. einer Vliesschicht bedürfte. Indem man auf herkömmliche Spritzgieß-, Spritzpräge- bzw. Spritzpressverfahren zurückgreifen kann, fallen regelmäßig auch geringere Werkzeug- und Maschinenkosten an. Beispielsweise können herkömmliche Spritzgießwerkzeuge, die für die Herstellung von Karosserieinnenteilen in Frage kommen, für die erfindungsgemäße Verfahren verwendet werden.

Aufgrund der guten Tiefziehfähigkeit bzw. des guten Verstrekkungsverhaltens des Verbundes aus Dekormaterial, insbesondere Leder, und der Schicht aus dem zelligen Polyisocyanat-Polyadditions-Elastomer, können, unabhängig davon, wie dieser Zweischichtverbund erhalten wird, z.B. mittels Verklebens oder Direkthinterschäumens, im Hinterspritz-, Hintergieß- oder Hinterpressprozess nicht nur ebenförmige, d.h. im wesentlichen flächige, oder schalenförmige Formteile, sondern auch solche mit Einbuchtungen und Ausformungen, auch senkrechten Ausformungen oder Vertiefungen, z.B. in Form von Griffen, Griffmulden, Ablagen oder Umbugen erhalten werden. Die guten, mit den erfindungsgemäßen Verbundbauteilen einhergehenden Oberflächeneigenschaften sind somit auch bei Formteilen mit anspruchsvoller Geometrie zugänglich.

Die erfindungsgemäßen Verbundformkörper können in einer Vielzahl von Anwendungen eingesetzt werden, z.B. als Bauteile oder Bauteilkomponenten im Fahrzeug-, Flugzeug-, Schiff- oder Möbelbau. Als Karosserieinnenbauteile kommen z.B. Armaturenbretter, Innenverkleidungen, also Wand-, Türseiten- oder Dachverkleidungen, Rückenlehnen, Sitzflächen, Armlehnen oder Mittelkonsolen in Frage. Neben Einsatzmöglichkeiten in der Automobilindustrie kommt auch eine Ausgestaltung als Schutzhülle für (Mobil)-Telefone, eine Ausrüstung für Schalenkoffer, Taschen oder ein Einsatz bei der Schuhherstellung in Betracht. Geeignete Bauteile oder Bauteilkomponenten in der Möbelindustrie stellen z.B. Rückenlehnen, Sitzflächen oder Armlehnen dar.

Die Erfindung wir anhand der folgenden Beispiele näher erläutert, ohne durch diese in irgendeiner Weise inhaltlich beschränkt zu sein.

### Beispiele:

Als Dekormaterial wurde handelsübliches chromfreies Halbfertigleder eingesetzt. Für das zellige Polyisocyanat-Polyadditions-Elastomer wurde auf das Handelsprodukt Cellasto^{®} MH 24 (Elastogran GmbH) zurückgegriffen. Für das Hinterspritzen kamen als Kunststoffmaterialien eine PBT/ASA-Mischung enthaltend 14 -Gew.-% an Glasfasern (das Handelsprodukt Ultradur^{®}S 4090 GX; BASF AG) und ein Standard-ABS-Polymerisat (das Handelsprodukt Terluran^{®}GP-22; BASF AG) zum Einsatz. Beim angegebenen Spritzdruck handelt es sich um den hydraulischen Spritzdruck, d.h. um den in der Schnecke erzeugten Spritzdruck.

### Beispiel 1:

Das zellige Polyisocyanat-Polyadditions-Elastomer wurde direkt auf dem chromfreien Halbfertigleder vorgenommen, d.h. das Leder wurde direkt hinterschäumt. Nach Beendigung des Schäumvorgangs wurde die Cellasto^{®} MH 24-Schicht auf eine Schaumdicke von 3 mm abgeschält. Der erhaltene Zweischichtverbund wurde auf das Werkzeugmaß zugeschnitten, in das Werkzeug I (s.u.) eingelegt, auf der schließseitigen Werkzeughälfte fixiert und unter Standard-Spritzgießbedingungen gemäß Variante A (s.u.) mit Terluran^{®}GP-22 hinterspritzt. Das erhaltene Verbundbauteil wies eine einwandfreie Haftung des hinterspritzten Thermoplasts auf dem zelligen Polyisocyanat-Polyadditions-Elastomer auf. Die typische Lederoberfläche blieb erhalten, außerdem wies die Verbundbauteiloberfläche einen Soft-Touch-Effekt auf. Eine Versprödung und eine damit verbundene Doppelhäutigkeit der Lederoberfläche wurden bei diesem Verfahren nicht festgestellt.

### Werkzeug I:

| | |
|---|---|
| Bezeichnung: | Platte |
| Formteilmaße [mm] : | 200 x 100 x 4 |
| Wanddicke [mm] : | 4 |
| Kavität: | 1-fach |
| Schußgewicht [g]: | ca. 90 |
| Angußart: | Kegel - Kaltkanal |

### Spritzgießbedingungen gemäß Variante A:

a) Spritzgießmaschine

| | |
|---|---|
| Hersteller, Typ: | Ferromatik Milacron FM160/100FX |
| Max. theor. Hubvolumen [ccm]: | 113 |
| Max. theor. Spritzdruck [bar]: | 2374 |
| Schließkraft [kN]: | 1600 |
| Schneckendurchmesser [mm] : | 30 |

b) Verarbeitungsparameter

| | |
|---|---|
| Zykluszeit [s] : | 60 |
| Schneckenvorlaufgeschwindigkeit [mm/s]: | 50 |
| Spritzdruck [bar]: | 900 |
| Nachdruck [bar]: | 400 |
| Massetemperatur [°C]: | 250 |
| Werkzeugtemperatur [°C]: | 60 |

### Beispiel 2:

Eine 3 mm dicke Schicht aus Cellasto^{®} MH 24 wurde auf die Fleischseite von chromfreiem Halbfertigleder aufgeklebt. Die Klebeflächen waren sauber und trocken. Als Kleber wurde ein UHU-Sprühkleber aus ca. 15-20 cm Abstand möglichst fein und gleichmäßig sowohl auf die Fleischseite des Leders wie auch auf die Schicht aus Cellasto^{®} MH 24 aufgesprüht. Man ließ den aufgetragenen Sprühkleber etwa 10 min trocknen, bevor man Leder und Cellasto^{®}-Schicht mit kurzem kräftigen Druck zusammenpresste. Der erhaltene Zweischichtverbund wurde auf das Werkzeugmaß zugeschnitten, in das Werkzeug II (s.u.) eingelegt, auf der schließseitigen Werkzeughälfte fixiert und unter Standard-Spritzgießbedingungen gemäß Variante B (s.u.) mit Ultradur^{®}S 4090 GX hinterspritzt. Das erhaltene Verbundbauteil wies eine einwandfreie Haftung des hinterspritzten Thermoplasts auf dem zelligen Polyisocyanat-Polyadditions-Elastomer auf. Die typische Lederoberfläche und der damit verbundene Soft-Touch blieben auch in den kritischen Griffbereichen erhalten. Eine Versprödung und eine damit verbundene Doppelhäutigkeit der Lederoberfläche wurden bei diesem Verfahren nicht festgestellt.

### Werkzeug II:

| | |
|---|---|
| Bezeichnung: | H10 - KFZ-Teil |
| Formteilmaße [mm]: | 1118 x 400 x 60 |
| Wanddicke [mm] : | 3 - 4 |
| Kavität: | 1-fach |
| Schußgewicht [g] : | ca. 2100 |
| Angussart: | offene Düse - Heißkanal |

### Spritzgießbedingungen gemäß Variante B:

a) Spritzgießmaschine

| | |
|---|---|
| Hersteller, Typ: | Krauss Maffei KM1500 |
| Max. theor. Hubvolumen [ccm]: | 5500 |
| Max. theor. Spritzdruck [bar]: | 1840 |
| Schließkraft [kN]: | 15000 |
| Schneckendurchmesser [mm] : | 115 |

b) Verarbeitungsparameter

| | |
|---|---|
| Zykluszeit [s]: | 90 |
| Schneckenvorlaufgeschwindigkeit | [mm/s]: 50 |
| Spritzdruck [bar]: | 1700 |
| Nachdruck [bar]: | 400 |
| Massetemperatur [°C]: | 270 |
| Werkzeugtemperatur [°C]: | 60 |

### Beispiel 3:

Der Zweischichtverbund aus Halbfertigleder und einer Schicht aus Cellasto^{®} MH 24 wurde, wie unter Beispiel 2 beschrieben, hergestellt. Der erhaltene Zweischichtverbund wurde auf das Werkzeugmaß zugeschnitten, in das Werkzeug III (s.u.) eingelegt, auf der schließseitigen Werkzeughälfte fixiert und unter Standard-Spritzprägebedingungen gemäß Variante C (s.u.) mit Ultradur^{®}S 4090 GX hinterpresst, d.h. etwa 50 % des Schmelzeeintrags wurden bei geöffnetem Werkzeug vorgenommen (Werkzeugöffnung von 10 mm) und das Werkzeug anschließend mit einer Geschwindigkeit von 10 mm/sec geschlossen. Das erhaltene Verbundbauteil wies eine einwandfreie Haftung des hinterspritzten Thermoplasts auf dem zelligen Polyisocyanat-Polyadditions-Elastomer auf. Die typische Lederoberfläche und der damit verbundene Soft-Touch blieben auch in den kritischen Griffbereichen erhalten. Eine Versprödung und eine damit verbundene Doppelhäutigkeit der Lederoberfläche wurden bei diesem Verfahren nicht festgestellt.

Werkzeug III entspricht Werkzeug II.

Spritzgießbedingungen gemäß Variante C:
a) Spritzgießmaschine

| | |
|---|---|
| Hersteller, Typ: | Krauss Maffei KM1500 |
| Max. theor. Hubvolumen [ccm]: | 5500 |
| Max. theor. Spritzdruck [bar]: | 1840 |
| Schließkraft [kN] : | 15000 |
| Schneckendurchmesser [mm] : | 115 |

b) Verarbeitungsparameter

| | |
|---|---|
| Zykluszeit [s] : | 90 |
| Schneckenvorlaufgeschwindigkeit [mm/s]: | 20 |
| Spritzdruck [bar]: | 500 |
| Nachdruck [bar]: | 0 |
| Massetemperatur [°C]: | 270 |
| Werkzeugtemperatur [°C]: | 60 |
| Prägehub [mm]: | 10 |
| Prägegeschwindigkeit [mm/s]: | 10 |
| Präge-Schmelzevorlage [%]: | ca. 50 |

## Patentansprüche

1. Verbundbauteil umfassend in dieser Reihenfolge eine Schicht aus einem Dekormaterial (A), eine Schicht aus einem zelligen Polyisocyanat-Polyadditions-Elastomer (B) mit einem Druckverformungsrest kleiner 25 % nach DIN 53572 (als Prüfkörper wird ein Würfel der Abmessung 40 mm x 400 mm x 30 mm ohne Silikonanstrich verwendet, die Prüfung erfolgt bei konstanter Verformung, wobei der Prüfkörper um 40 % zusammengedrückt und 22 Stunden bei 80°C im Umluftschrank gehalten, die Prüfeinrichtung nach der Entnahme aus dem Wärmeschrank 2 Stunden im zusammengedrückten Zustand auf Raumtemperatur abgekühlt, anschließend der Prüfkörper aus der Prüfeinrichtung entnommen und 10 min ± 30 s nach der Entnahme der Prüfkörper aus der Prüfeinrichtung die Höhe der Prüfkörper auf 0,1 mm genau gemessen wird) und eine Schicht aus einem hinterspritzten, hintergossenen oder hinterpressten thermoplastischen Kunststoff (C) .

2. Verbundbauteil nach Anspruch 1, **dadurch gekennzeichnet, dass** das Dekormaterial (A) und die Schicht aus zelligem Polyisocyanat-Polyadditions-Elastomer (B) miteinander verklebt sind.

3. Verbundbauteil nach den Ansprüchen 1 oder 2, **dadurch gekennzeichnet, dass** die Schicht aus dem zelligen Polyisocyanat-Polyadditions-Elastomer (B) in perforierter Form eingesetzt wird.

4. Verbundbauteil nach den Ansprüchen 1 bis 3, **dadurch gekennzeichnet, dass** das Dekormaterial Leder, insbesondere Halbfertigleder ist.

5. Verbundbauteil nach den Ansprüchen 1 bis 4, **dadurch gekennzeichnet, dass** die Schicht aus dem zelligen Polyisocyanat-Polyadditions-Elastomer (B) 2,5 bis 10 mm dick ist.

6. Verbundbauteil nach den Ansprüchen 1 bis 5, **dadurch gekennzeichnet, dass** die Zellen im Polyisocyanat-Polyadditions-Elastomer (B) einen Durchmesser von 0,01 bis 1,5 mm aufweisen.

7. Verbundbauteil nach den Ansprüchen 1 bis 6, **dadurch gekennzeichnet, dass** das zellige Polyisocyanat-Polyadditions-Elastomer (B) der Elastomerschicht eine Dichte nach DIN 53420 von 200 bis 1100 kg/m³, eine Zugfestigkeit nach DIN 53571 von ≥ 2 N/mm², eine Dehnung nach DIN 53571 von ≥ 300 % und eine Weiterreißfestigkeit nach DIN 53515 von ≥ 8 N/mm aufweist.

8. Verbundbauteil nach Anspruch 7, **dadurch gekennzeichnet, dass** die Dichte kleiner 400 kg/m³ ist.

9. Verbundbauteil nach den Ansprüchen 1 bis 8, **dadurch gekennzeichnet, dass** man für die Schicht aus thermoplastischen Polymeren (C) Polyolefine, Polyester, Polycycloolefine, Poly(meth)acrylate, Polyamide, Polycarbonate, Polyurethane, Polyacetale, Polystyrole, Polyphenylenether, Polysulfone, Polyvinylchloride, Polyoxyalkylene, Polyethersulfonen, Polyetherketone, Styrol(co)polymere oder Mischungen der vorgenannten Polymere verwendet.

10. Verfahren zur Herstellung von Verbundbauteilen, bei dem man ein Dekormaterial (A) in eine Werkzeugform einlegt, wobei man die Dekormaterialoberseite an der Werkzeugwandung anlegt, **dadurch gekennzeichnet, dass** man die ein zelliges Polyisocyanat-Polyadditions-Elastomer (B) mit einem Druckverformungsrest kleiner 25 % nach DIN 53572 (als Prüfkörper wird ein Würfel der Abmessung 40 mm x 400 mm x 30 mm ohne Silikonanstrich verwendet, die Prüfung erfolgt bei konstanter Verformung, wobei der Prüfkörper um 40 % zusammengedrückt und 22 Stunden bei 80°C im Umluftschrank gehalten, die Prüfeinrichtung nach der Entnahme aus dem Wärmeschrank 2 Stunden im zusammengedrückten Zustand auf Raumtemperatur abgekühlt, anschließend der Prüfkörper aus der Prüfeinrichtung entnommen und 10 min ± 30 s nach der Entnahme der Prüfkörper aus der Prüfeinrichtung die Höhe der Prüfkörper auf 0,1 mm genau gemessen wird) bildenden Komponenten im Gemisch rückseitig auf das Dekormaterial aufträgt oder während des oder beim Auftragen vermengt und ausreagieren lässt und dass man die gebildete Elastomerschicht rückseitig mit einem thermoplastischen Polymer (C) hinterspritzt, hintergießt oder hinterpresst.

11. Verfahren zur Herstellung von Verbundbauteilen, bei dem man ein Dekormaterial (A) mit einem Produkt aus einem zelligen Polyisocyanat-Polyadditions-Elastomer (B) mit einem Druckverformungsrest kleiner 25 % nach DIN 53572 (als Prüfkörper wird ein Würfel der Abmessung 40 mm x 400 mm x 30 mm ohne Silikonanstrich verwendet, die Prüfung erfolgt bei konstanter Verformung, wobei der Prüfkörper um 40 % zusammengedrückt und 22 Stunden bei 80°C im Umluftschrank gehalten, die Prüfeinrichtung nach der Entnahme aus dem Wärmeschrank 2 Stunden im zusammengedrückten Zustand auf Raumtemperatur abgekühlt, anschließend der Prüfkörper aus der Prüfeinrichtung entnommen und 10 min ± 30 s nach der Entnahme der Prüfkörper aus der Prüfeinrichtung die Höhe der Prüfkörper auf 0,1 mm genau gemessen wird) verklebt und die erhaltene Verbundstruktur von der Seite des Elastomerprodukts (B) mit einem thermoplastischen Polymer (C) hinterspritzt, hintergießt oder hinterpresst.

12. Verfahren zur Herstellung von Verbundbauteilen, bei dem man ein Dekormaterial (A) in eine Werkzeugform einlegt, wobei man die Dekormaterialoberseite an der Werkzeugwandung anlegt, **dadurch gekennzeichnet, dass** man eine perforierte Schicht aus einem Polyisocyanat-Polyadditions-Elastomer (B) mit einem Druckverformungsrest kleiner 25 % nach DIN 53572 (als Prüfkörper wird ein Würfel der Abmessung 40 mm x 400 mm x 30 mm ohne Silikonanstrich verwendet, die Prüfung erfolgt bei konstanter Verformung, wobei der Prüfkörper um 40 % zusammengedrückt und 22 Stunden bei 80°C im Umluftschrank gehalten, die Prüfeinrichtung nach der Entnahme aus dem Wärmeschrank 2 Stunden im zusammengedrückten Zustand auf Raumtemperatur abgekühlt, anschließend der Prüfkörper aus der Prüfeinrichtung entnommen und 10 min ± 30 s nach der Entnahme der Prüfkörper aus der Prüfeinrichtung die Höhe der Prüfkörper auf 0,1 mm genau gemessen wird) rückseitig an das Dekormaterial (A) anlegt, gegebenenfalls fixiert, und die Elastomerschicht (B) rückseitig mit einem thermoplastischen Polymer (C) hinterspritzt, hintergießt oder hinterpresst.

13. Verfahren nach den Ansprüchen 10 bis 12, **dadurch gekennzeichnet, dass** die Dekormaterialschicht (A) Leder darstellt.

14. Verfahren nach Anspruch 13, **dadurch gekennzeichnet, dass** das Leder ein Halbfertigleder ist.

15. Verfahren nach Anspruch 14, **dadurch gekennzeichnet, dass** man die Lederseite des Verbundbauteils nach dem Hinterspritzen, Hintergießen oder Hinterpressen lackiert.

16. Verwendung der Verbundbauteile nach den Ansprüchen 1 bis 9 für die Herstellung von Bauteilen oder Bauteilkomponenten für Kraftfahrzeuge, Flugzeuge, Schiffe oder Möbel.

17. Verwendung nach Anspruch 16, wobei die Bauteile Armaturenbretter, Mittelkonsolen, Türseiten-, Wand- oder Dachverkleidungen, Armlehnen, Rückenlehnen, Koffer, Taschen, Sitzflächen, Schutzhüllen für (Mobil)-Telefone oder Schuhkomponenten darstellen.

18. Armaturenbretter, Mittelkonsolen, Türseiten-, Wand- oder Dachverkleidungen, Armlehnen, Rückenlehnen, Koffer, Taschen, Sitzflächen, Schutzhüllen für (Mobil)-Telefone oder Schuhkomponenten enthaltend ein Verbundbauteil gemäß den Ansprüchen 1 bis 9.

## Claims

1. A composite component comprising, in this order, a layer made from a decorative material (A), a layer made from a cellular polyisocyanate polyaddition elastomer (B) with compression set of less than 25% to DIN 53572 (the test specimen used being a cuboid of dimensions 40 x 400 x 30 mm without any silicone coat, tested at constant deformation, the test specimen being compressed by 40% and held in a circulating-air cabinet at 80°C for 22 hours, and the test rig being cooled to room temperature in 2 hours after removal from the heating cabinet while compression is maintained, the test specimen then being removed from the test rig and the height of the test specimens being measured accurately to 0.1 mm 10 min ± 30 s after their removal from the test rig), and a layer made from a thermoplastic (C) applied by in-mold coating, using an injection molding, casting, or compression molding process.

2. The composite component according to claim 1, wherein the decorative material (A) and the layer made from cellular polyisocyanate polyaddition elastomer (B) have been adhesive-bonded to one another.

3. The composite component according to claim 1 or 2, wherein the layer made from the cellular polyisocyanate polyaddition elastomer (B) is in perforated form when used.

4. The composite component according to any of claims 1 to 3, wherein the decorative material is leather, in particular semifinished leather.

5. The composite component according to any of claims 1 to 4, wherein the layer made from the cellular polyisocyanate polyaddition elastomer (B) has a thickness of from 2.5 to 10 mm.

6. The composite component according to any of claims 1 to 5, wherein the cells in the polyisocyanate polyaddition elastomer (B) have a diameter of from 0.01 to 1.5 mm.

7. The composite component according to any of claims 1 to 6, wherein the cellular polyisocyanate polyaddition elastomer (B) of the elastomer layer has a density to DIN 53420 of from 200 to 1100 kg/m³, a tensile strength to DIN 53571 of ≥ 2 N/mm², an elongation to DIN 53571 of ≥ 300%, and a tear propagation resistance to DIN 53515 of ≥ 8 N/mm.

8. The composite component according to claim 7, whose density is less than 400 kg/m³.

9. The composite component according to any of claims 1 to 8, wherein, for the layer made from thermoplastic polymers (C), use is made of polyolefins, polyesters, polycycloolefins, poly(meth)acrylates, polyamides, polycarbonates, polyurethanes, polyacetals, polystyrenes, polyphenylene ethers, polysulfones, polyvinyl chlorides, polyoxyalkylenes, polyether sulfones, polyether ketones, styrene(co)polymers, or a mixture of the abovementioned polymers.

10. A process for producing composite components, in which a decorative material (A) is placed in a mold, the upper side of the decorative material being placed against the mold wall, which comprises applying to the reverse side of the decorative material a mixture of components which form a cellular polyisocyanate polyaddition elastomer (B) with compression set of less than 25% to DIN 53572 (the test specimen used being a cuboid of dimensions 40 x 400 x 30 mm without any silicone coat, tested at constant deformation, the test specimen being compressed by 40% and held in a circulating-air cabinet at 80°C for 22 hours, and the test rig being cooled to room temperature in 2 hours after removal from the heating cabinet while compression is maintained, the test specimen then being removed from the test rig and the height of the test specimens being measured accurately to 0.1 mm 10 min ± 30 s after their removal from the test rig), and permitting them to react fully, and applying a thermoplastic polymer (C) by in-mold coating to the reverse side of the resultant elastomer layer, using an injection molding, casting, or compression molding process.

11. A process for producing composite components, in which a decorative material (A) is adhesive-bonded to a product made from a cellular polyisocyanate polyaddition elastomer (B) with compression set of less than 25% to DIN 53572 (the test specimen used being a cuboid of dimensions 40 x 400 x 30 mm without any silicone coat, tested at constant deformation, the test specimen being compressed by 40% and held in a circulating-air cabinet at 80°C for 22 hours, and the test rig being cooled to room temperature in 2 hours after removal from the heating cabinet while compression is maintained, the test specimen then being removed from the test rig and the height of the test specimens being measured accurately to 0.1 mm 10 min ± 30 s after their removal from the test rig), and a thermoplastic polymer (C) is applied to the resultant composite structure from the side occupied by the elastomer product (B) by in-mold coating, using an injection molding, casting, or compression molding process.

12. A process for producing composite components, in which a decorative material (A) is placed in a mold, the upper side of the decorative material being placed against the mold wall, which comprises placing, or, where appropriate securing a perforated layer made from a polyisocyanate polyaddition elastomer (B) with a compression set of less than 25% to DIN 53572 (the test specimen used being a cuboid of dimensions 40 x 400 x 30 mm without any silicone coat, tested at constant deformation, the test specimen being compressed by 40% and held in a circulating-air cabinet at 80°C for 22 hours, and the test rig being cooled to room temperature in 2 hours after removal from the heating cabinet while compression is maintained, the test specimen then being removed from the test rig and the height of the test specimens being measured accurately to 0.1 mm 10 min ± 30 s after their removal from the test rig) against the reverse side of the decorative material (A), and a thermoplastic polymer (C) is applied to the reverse side of the elastomer layer (B), using an injection molding, casting, or compression molding process.

13. The process according to any of claims 10 to 12, wherein the decorative material layer (A) is leather.

14. The process according to claim 13, wherein the leather is a semifinished leather.

15. The process according to claim 14, wherein, after the in-mold coating by an injection molding, casting, or compression molding process, the leather side of the composite component is finished by coating.

16. The use of the composite components according to any of claims 1 to 9 for producing components or parts of components for motor vehicles, aircrafts, ships, or furniture.

17. The use according to claim 16, where the components are dashboards, center consoles, door paneling, wall paneling or headlining, armrests, backrests, suitcases, bags, seating, protective cases for (mobile) telephones, or shoe components.

18. A dashboard, a center console, a door panel, a wall panel, a headlining, an armrest, a backrest, a trunk, a pocket, a seating, a protective case for a (mobile) telephone, or a shoe component comprising a composite component according to any of claims 1 to 9.

## Revendications

1. Elément de construction composite comprenant, dans cette ordre, une couche en une matière décorative (A), une couche en un élastomère de polyaddition de polyisocyanate cellulaire (B) présentant une déformation permanente inférieure à 25 % selon la norme DIN 53572 (un hexaèdre aux dimensions de 40 mm x 400 mm x 30 mm sans enduit de silicone étant utilisé comme éprouvette, l'examen ayant lieu à déformation constante, l'éprouvette étant comprimée de 40 % et maintenue pendant 22 heures à 80°C dans une étuve à circulation d'air, le dispositif d'examen étant, après le prélèvement hors de l'étuve, refroidi pendant 2 heures à l'état comprimé, à la température ambiante, l'éprouvette étant ensuite prélevée du dispositif d'examen et, 10 minutes ± 30 secondes après le prélèvement de l'éprouvette hors du dispositif d'examen, la hauteur de l'éprouvette étant mesurée à 0,1 mm de précision) et une couche en une substance synthétique thermoplastique (C) surmoulée par injection, coulage ou pressage.

2. Elément de construction composite suivant la revendication 1, **caractérisé en ce que** la matière décorative (A) et la couche en un élastomère de polyaddition de polyisocyanate cellulaire (B) sont collées l'une à l'autre.

3. Elément de construction composite suivant les revendications 1 ou 2, **caractérisé en ce que** la couche en l'élastomère de polyaddition de polyisocyanate cellulaire (B) est mise en oeuvre sous une forme perforée.

4. Elément de construction composite suivant les revendications 1 à 3, **caractérisé en ce que** la matière décorative est du cuir, en particulier du cuir semi-fini.

5. Elément de construction composite suivant les revendications 1 à 4, **caractérisé en ce que** la couche en élastomère de polyaddition de polyisocyanate cellulaire (B) est d'une épaisseur de 2,5 à 10 mm.

6. Elément de construction composite suivant les revendications 1 à 5, **caractérisé en ce que**, dans l'élastomère de polyaddition de polyisocyanate (B), les cellules présentent un diamètre de 0,01 à 1,5 mm.

7. Elément de construction composite suivant les revendications 1 à 6, **caractérisé en ce que** l'élastomère de polyaddition de polyisocyanate cellulaire (B) de la couche d'élastomère présente une masse volumique selon la norme DIN 53420 de 200 à 1 100 kg/m³, une résistance à la traction selon la norme DIN 53571 de ≥ 2 N/mm², un allongement selon la norme DIN 53571 de ≥ 300 % et une résistance à l'allongement d'une déchirure amorcée selon la norme DIN 53515 de ≥ 8 N/mm.

8. Elément de construction composite suivant la revendication 7, **caractérisé en ce que** la masse volumique est inférieure à 400 kg/m³.

9. Elément de construction composite suivant les revendications 1 à 8, **caractérisé en ce que**, pour la couche en polymères thermoplastiques (C), on utilise des polyoléfines, des polyesters, des polycyclooléfines, des poly(méth)acrylates, des polyamides, des polycarbonates, des polyuréthanes, des polyacétals, des polystyrènes, des éthers de polyphénylène, des polysulfones, des chlorures de polyvinyle, des polyoxyalkylènes, des polyéthersulfones, des polyéthercétones, des (co)polymères de styrène ou des mélanges des polymères précités.

10. Procédé de préparation d'éléments de construction composites, dans lequel on introduit une matière décorative (A) dans un moule d'outil, en appliquant la face supérieure de la matière décorative sur la paroi d'outil, **caractérisé en ce qu'**on applique du côté arrière sur la matière décorative, en mélange, les composants formant un élastomère de polyaddition de polyisocyanate cellulaire (B) présentant une déformation permanente inférieure à 25 % selon la norme DIN 53572 (un hexaèdre aux dimensions de 40 mm x 400 mm x 30 mm sans enduit de silicone étant utilisé comme éprouvette, l'examen ayant lieu à déformation constante, l'éprouvette étant comprimée de 40 % et maintenue pendant 22 heures à 80°C dans une étuve à circulation d'air, le dispositif d'examen étant, après le prélèvement hors de l'étuve, refroidi à la température ambiante pendant 2 heures à l'état comprimé, l'éprouvette étant ensuite prélevée du dispositif d'examen et la hauteur de l'éprouvette étant, 10 minutes ± 30 secondes après le prélèvement de l'éprouvette hors du dispositif d'examen, mesurée à 0,1 mm de précision) ou on les mélange et les laisse réagir pendant ou au cours de l'application et **en ce que**, du côté arrière, on surmoule la couche d'élastomère formée par un polymère thermoplastique (C) par injection, coulage ou pressage.

11. Procédé de préparation d'éléments de construction composites, dans lequel on colle une matière décorative (A) avec un produit à base d'un élastomère de polyaddition de polyisocyanate cellulaire (B) présentant une déformation permanente inférieure à 25 % selon la norme DIN 53572 (un hexaèdre aux dimensions de 40 mm x 400 mm x 30 mm sans enduit de silicone étant utilisé comme éprouvette, l'examen ayant lieu à déformation constante, l'éprouvette étant comprimée de 40 % et maintenue pendant 22 heures à 80°C dans une étuve à circulation d'air, le dispositif d'examen étant, après le prélèvement hors de l'étuve, refroidi à la température ambiante pendant 2 heures à l'état comprimé, l'éprouvette étant ensuite prélevée du dispositif d'examen et la hauteur de l'éprouvette étant mesurée à 0,1 mm de précision 10 minutes ± 30 secondes après le prélèvement de l'éprouvette hors du dispositif d'examen) et la structure composite obtenue est, du côté du produit élastomère (B), surmoulée par un polymère thermoplastique (C) par injection, coulage ou pressage.

12. Procédé de préparation d'éléments de construction composites, dans lequel on introduit une matière décorative (A) dans un moule d'outil, en appliquant le côté supérieur de la matière décorative sur la paroi d'outil, **caractérisé en ce que**, sur la matière décorative (A), on applique du côté arrière, éventuellement en la fixant, une couche perforée en un élastomère de polyaddition de polyisocyanate cellulaire (B) présentant une déformation permanente inférieure à 25 % selon la norme DIN 53572 (un hexaèdre aux dimensions de 40 mm x 400 mm x 30 mm sans enduit de silicone étant utilisé comme éprouvette, l'examen ayant lieu à déformation constante, l'éprouvette étant comprimée de 40 % et maintenue pendant 22 heures à 80°C dans l'étuve à circulation d'air, le dispositif d'examen étant, après le prélèvement hors de l'étuve, refroidi à la température ambiante pendant 2 heures à l'état comprimé, l'éprouvette étant ensuite prélevée du dispositif d'examen et, 10 minutes ± 30 secondes après le prélèvement de l'éprouvette hors du dispositif d'examen, la hauteur de l'éprouvette étant mesurée à 0,1 mm de précision), et, du côté arrière, on surmoule la couche d'élastomère (B) par un polymère thermoplastique (C) par injection, coulage ou pressage.

13. Procédé suivant les revendications 10 à 12, **caractérisé en ce que** du cuir forme la couche de matière décorative (A).

14. Procédé suivant la revendication 13, **caractérisé en ce que** le cuir est un cuir semi-fini.

15. Procédé suivant la revendication 14, **caractérisé en ce qu'**on vernit le côté cuir de l'élément de construction composite après le surmoulage par injection, coulage ou pressage.

16. Utilisation d'éléments de construction composites suivant les revendications 1 à 9, pour la fabrication d'éléments de construction ou de composants d'élément de construction de véhicules automobiles, d'avions, de navires ou de meubles.

17. Utilisation suivant la revendication 16, dans laquelle les éléments de construction sont des tableaux de bord, des pupitres centraux, des habillages de portes, de parois ou de toits, des accoudoirs, des dossiers, des coffres, des poches, des surfaces de sièges, des enveloppes de protection pour téléphones (mobiles) ou des composants de souliers.

18. Tableaux de bord, pupitres centraux, habillages de portes, de parois ou de toits, accoudoirs, dossiers, coffres, poches, surfaces de sièges, enveloppes de protection pour téléphones (mobiles) ou composants de souliers contenant un élément de construction composite suivant les revendications 1 à 9.
